# EUROPEAN PATENT APPLICATION

(11) **EP 4 835 159 A1**
(43) Date of publication of application: **04.11.2026**
(21) Application number: 24913633.4
(22) Date of filing: 19.12.2024
(51) Int. Cl.: C25B 11/093, C25B 1/04, C25B 13/08

(54) **CATALYST FOR OXYGEN EVOLUTION REACTION IN WATER ELECTROLYSIS CELL AND PRODUCTION METHOD THEREFOR, AND MEMBRANE-ELECTRODE ASSEMBLY FOR WATER ELECTROLYSIS CELL AND WATER ELECTROLYSIS CELL, EACH COMPRISING CATALYST**

(30) Priority: 27.12.2023 KR 20230193460; 16.12.2024 KR 20240187305
(71) Applicant: Kolon Industries, Inc., Seoul 07793 (KR)
(72) Inventor: LIM, Youngjoon, Seoul 07793 (KR); KIM, Jun Young, Seoul 07793 (KR); KIM, Jung Ho, Seoul 07793 (KR); LEE, Ju Sung, Seoul 07793 (KR); PARK, Hyun Jin, Seoul 07793 (KR)
(74) Representative: Vossius & Partner Patentanwälte Rechtsanwälte mbB
(86) International application number: PCT/KR2024/020759
(87) International publication number: WO 2025/143690

(57) **Abstract**

Provided is a catalyst for an oxygen evolution reaction in a water electrolysis cell, the catalyst comprising: water electrolysis catalyst particles containing a noble metal oxide; and a conductive additive containing a fluorine-doped metal oxide, wherein in the entire fluorine-doped metal oxide, the content of fluorine is 1 at% to 20 at% relative to a total of 100 at% of the components as measured by X-ray photoelectron spectroscopy (XPS).

## Description

### [Technical Field]

The present disclosure relates to a catalyst for an oxygen evolution reaction of a water electrolysis cell and a manufacturing method thereof, and a membrane-electrode assembly for a water electrolysis cell and a water electrolysis cell including the same.

This research was supported by the Ministry of Trade, Industry and Energy (MOTIE) and the Korea Institute of Energy Technology Evaluation and Planning (KETEP). (Project Number: 20223030040220)

### [Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels. Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

Regarding a catalyst for water electrolysis, particularly a catalyst for an oxygen evolution electrode of a polymer electrolyte membrane (PEM) water electrolysis, iridium black and iridium oxide powder have been used as catalysts for an oxygen evolution reaction used in a conventional PEM water electrolysis oxygen evolution electrode, but improvement of low dispersibility, low electrical conductivity, and instability thereof is required.

### [Disclosure]

### [Technical Problem]

Provided is a catalyst for an oxygen evolution reaction of a water electrolysis cell, which may reduce an amount of a noble metal used, and which may exhibit high electrochemical durability and conductivity even in a high-voltage and low-pH water electrolysis operating environment when applied to an electrode of a water electrolysis cell.

### [Technical Solution]

In one embodiment, provided is a catalyst for an oxygen evolution reaction of a water electrolysis cell, comprising: water electrolysis catalyst particles containing a noble metal oxide; and a conductive additive containing a fluorine-doped metal oxide, wherein a content of fluorine is 1 at% to 20 at% based on 100 at% of a sum of components of the entire fluorine-doped metal oxide measured by X-ray photoelectron spectroscopy.

In another embodiment, provided is an oxygen evolution electrode comprising the catalyst for an oxygen evolution reaction of a water electrolysis cell.

In another embodiment, provided is a method of manufacturing an oxygen evolution electrode, comprising: (i) manufacturing a metal oxide; (ii) mixing the metal oxide and a fluorine precursor, and then performing a heat treatment to manufacture a fluorine-doped metal oxide; (iii) mixing a noble metal oxide and an ionomer to manufacture a slurry; and (iv) mixing the slurry and the fluorine-doped metal oxide, followed by dispersing.

In another embodiment, provided is a membrane-electrode assembly for a water electrolysis cell, comprising: a polymer electrolyte membrane; an oxygen evolution electrode positioned on one surface of the polymer electrolyte membrane; and a hydrogen evolution electrode positioned on the other side of the polymer electrolyte membrane.

In another embodiment, provided is a water electrolysis cell including the membrane-electrode assembly for a water electrolysis cell.

### [Advantageous Effects]

A catalyst for an oxygen evolution reaction of a water electrolysis cell manufactured according to an embodiment may reduce an amount of a noble metal used, and when applied to an electrode of a water electrolysis cell, may exhibit high electrochemical durability and conductivity even in a high-voltage and low-pH water electrolysis operating environment.

### [Brief Description Of The Drawings]

FIG. 1 is a schematic diagram illustrating a membrane-electrode assembly (MEA) for a water electrolysis cell.
FIG. 2 is a graph illustrating initial water electrolysis performance of the membrane-electrode assemblies manufactured in Example 5, Comparative Example 2, and Comparative Example 3.
FIG. 3 is a graph illustrating water electrolysis performances after a degradation test of the membrane-electrode assemblies manufactured in Example 5, Comparative Example 2, and Comparative Example 3.
FIG. 4 is a graph illustrating changes in initial water electrolysis performances and water electrolysis performances after a degradation test of the membrane-electrode assemblies manufactured in Example 5, Comparative Example 2, and Comparative Example 3.

### [Best Mode]

Hereinafter, specific embodiments will be described in detail so that those of ordinary skill in the art may easily practice them. However, the present invention may be embodied in many different forms and is not limited to the embodiments described herein.

The terms used herein are used only to describe exemplary embodiments, and are not intended to limit the present invention. A singular expression includes a plural expression unless the context clearly indicates otherwise.

The term "combination thereof" refers to a mixture, a laminate, a composite, a copolymer, an alloy, a blend, a reaction product, and the like of components

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the drawings, thicknesses are exaggerated to clearly express various layers and regions, and similar portions are denoted by the same reference numerals throughout the specification. When a portion such as a layer, a membrane, a region, or a plate is referred to as being "on" or "above" another portion, it includes not only a case in which the portion is "directly on" another portion but also a case in which another portion is present therebetween. Conversely, when a portion is referred to as being "directly on" another portion, it means that no other portion is present therebetween.

A "layer" includes not only a shape formed on an entire surface but also a shape formed on a partial surface when observed in a plan view.

An average particle diameter may be measured by a method widely known to those skilled in the art; for example, it may be measured by a particle size analyzer, or may be measured from a transmission electron microscope image or a scanning electron microscope image. Alternatively, an average particle diameter value may be obtained by measuring using a dynamic light scattering method, performing data analysis to count the number of particles for each particle size range, and calculating therefrom. Unless otherwise defined, the average particle diameter may mean a diameter (D₅₀) of particles having a cumulative volume of 50 volume% in a particle size distribution. In addition, unless otherwise defined, the average particle diameter may be obtained by measuring sizes (diameters or major axis lengths) of about 20 particles randomly from a scanning electron microscope image to obtain a particle size distribution, and taking a diameter (D₅₀) of particles having a cumulative volume of 50 volume% in the particle size distribution as the average particle diameter.

"Or" is not interpreted in an exclusive sense, and for example, "A or B" is interpreted as including A, B, A+B, and the like.

"Metal" is interpreted as a concept including common metals, transition metals, and metalloids (semi-metals).

### Catalyst for an oxygen evolution reaction

In the present specification, the catalyst for an oxygen evolution reaction refers to a catalyst applied to an electrode at which the oxygen evolution reaction (OER) occurs (hereinafter, referred to as an oxygen evolution electrode). That is, it refers to a catalyst included in the oxygen evolution electrode to be described later.

A catalyst for an oxygen evolution reaction of a water electrolysis cell according to an embodiment is a catalyst for an oxygen evolution reaction of a water electrolysis cell comprising: water electrolysis catalyst particles containing a noble metal oxide; and a conductive additive containing a fluorine-doped metal oxide, wherein a content of fluorine is 1 at% to 20 at% based on 100 at% of a sum of components of the entire fluorine-doped metal oxide measured by X-ray photoelectron spectroscopy (XPS).

The performance and durability of the catalyst for an oxygen evolution reaction may be improved depending on the types, shapes, and contents of the water electrolysis catalyst particles and the conductive additive.

A noble metal oxide is used as a catalyst for an oxygen evolution reaction in a polymer electrolyte membrane water electrolysis cell, but there is a problem in that a high content of a noble metal is required due to low electrical conductivity of the noble metal oxide, and a conductive additive capable of compensating for the low electrical conductivity is required to lower the content of the noble metal. Accordingly, in one embodiment, a fluorine-doped metal oxide is used as a conductive additive. To solve the problem that it is difficult to control a doping amount and achieve uniform fluorine doping due to defluorination during a solvent process caused by the high reactivity of fluorine, an embodiment proposes a water electrolysis electrode having high electrical conductivity and electrochemical corrosion resistance using a uniformly fluorine-doped metal oxide.

### Water electrolysis catalyst particles

Water electrolysis catalyst particles according to an embodiment contain a noble metal oxide, and the noble metal may be a non-platinum based precious metal, and, for example, the non-platinum based precious metal may include palladium (Pd), ruthenium (Ru), iridium (Ir), an alloy thereof, or a combination thereof. A noble metal oxide according to an embodiment may include IrOₓ (x is an integer of 1 to 3), RuOₓ (x is an integer of 1 to 3), PdOₓ (x is an integer of 1 to 3), IrMOₓ (M includes Ru, Sn, Ti, Te, Nb, or a combination thereof, and x is an integer of 1 to 3), or a combination thereof, and more specifically, may include IrOₓ (x is an integer of 1 to 3). When the water electrolysis catalyst particles comprise the noble metal oxide, there is an advantage in that high catalytic activity may be exhibited.

The water electrolysis catalyst particles may be in a form supported on a support or a form not supported on a support, and more specifically, may be in a form supported on a support. The support may contain a metal oxide, and the metal oxide may include tungsten oxide, titanium oxide, nickel oxide, ruthenium oxide, tantalum oxide, tin oxide, cobalt oxide, or a combination thereof. When the catalyst for an oxygen evolution reaction of a water electrolysis cell comprises the support, there is an advantage in that the low electrical conductivity of the water electrolysis catalyst particles containing the noble metal oxide is compensated for, so that high catalytic activity may be exhibited even when the content of the noble metal is low. In addition, the support may have various shapes, and for example, may have a shape such as a sphere, a wire, a rod, a sheet, or a capsule.

An average particle diameter (D₅₀) of the water electrolysis catalyst particles may be 1 nm to 15 nm, and for example, may be 2 nm to 12 nm, or 4 nm to 10 nm. In addition, when the water electrolysis catalyst particles are in a form supported on a support, the average particle diameter of the water electrolysis catalyst particles may be 1 nm to 15 nm, and for example, may be 2 nm to 12 nm, or 4 nm to 10 nm. The average particle diameter may be obtained by randomly measuring sizes (diameters or major axis lengths) of about 20 particles in a scanning electron microscope image of the water electrolysis catalyst particles to obtain a particle size distribution, and taking a diameter (D₅₀) of particles having a cumulative volume of 50 volume% in the particle size distribution as the average particle diameter. Here, the average particle diameter of the water electrolysis catalyst particles may be smaller than an average particle diameter of the conductive additive to be described later. A catalyst for an oxygen evolution reaction according to an embodiment is in a form in which the water electrolysis catalyst particles and the conductive additive to be described later are mixed, and accordingly, it may form a conductive network to reduce a sheet resistance of an electrode and improve performance of a water electrolysis cell.

In one embodiment, based on 100 wt% of a total of the water electrolysis catalyst particles and the conductive additive, the water electrolysis catalyst particles may be included in an amount of 60 wt% to 95 wt%, and for example, may be included in an amount of 65 wt% to 85 wt%, or 70 wt% to 95 wt%. When a content ratio of the water electrolysis catalyst particles and the conductive additive is as described above, the catalyst for an oxygen evolution reaction including the same may form a conductive network to reduce a sheet resistance of an electrode, and may improve performance of a water electrolysis cell.

### Conductive additive

In one embodiment, a conductive additive contains a fluorine-doped metal oxide, and the metal may include, for example, tungsten (W), titanium (Ti), nickel (Ni), ruthenium (Ru), tantalum (Ta), tin (Sn), cobalt (Co), or a combination thereof. Accordingly, the metal oxide may include tungsten oxide, titanium oxide, nickel oxide, ruthenium oxide, tantalum oxide, tin oxide, cobalt oxide, or a combination thereof, and may preferably include tin oxide. When the catalyst for an oxygen evolution reaction comprises the conductive additive, there is an advantage in that high catalytic activity may be exhibited even when the content of the noble metal is low, by compensating for the low electrical conductivity of the water electrolysis catalyst particles containing a noble metal oxide. In addition, since fluorine is doped into the metal oxide included in the conductive additive, a bonding force with the metal oxide is improved, thereby preventing the doped fluorine or the metal of the metal oxide from being eluted in a water electrolysis operating environment, which may degrade the membrane-electrode performance.

The conductive additive may have various shapes, and for example, may have a shape such as a sphere, a wire, a rod, a sheet, or a capsule, and more specifically, may have a shape of a sphere or a wire. When the conductive additive has a spherical shape, an average particle diameter (D₅₀) of the conductive additive may be 0.05 µm to 0.5 µm, and for example, may be 0.05 µm to 0.3 µm, 0.05 µm to 0.3 µm, or 0.05 µm to 0.1 µm. The average particle diameter may be obtained by randomly measuring sizes (diameters or major axis lengths) of about 20 particles in a scanning electron microscope image of the conductive additive to obtain a particle size distribution, and taking a diameter (D₅₀) of a particle having a cumulative volume of 50 volume% in the particle size distribution as the average particle diameter. Here, the average particle diameter of the conductive additive may be smaller than the average particle diameter of the above-described water electrolysis catalyst particles. In addition, when the conductive additive has a wire shape, a length of the conductive additive may be 1 µm to 200 µm, and may be, for example, 3 µm to 180 µm, 5 µm to 165 µm, or 10 µm to 150 µm, and a diameter of the conductive additive may be 0.1 µm to 1.0 µm, and may be, for example, 0.2 µm to 1.0 µm, 0.2 µm to 0.9 µm, or 0.2 µm to 0.8 µm. A catalyst for an oxygen evolution reaction according to an embodiment is in a form in which a conductive additive and the above-described water electrolysis catalyst particle are mixed, and accordingly, may form a conductive network to decrease a sheet resistance of an electrode and improve performance of a water electrolysis cell.

In one embodiment, based on 100 wt% of the total of the water electrolysis catalyst particles and the conductive additive, the conductive additive may be included in an amount of 0.1 wt% to 15 wt%, and may be included in an amount of, for example, 0.2 wt% to 15 wt%, 0.4 wt% to 12 wt%, or 0.5 wt% to 10 wt%. When a content of the conductive additive is as described above, the catalyst for an oxygen evolution reaction including the same may form a conductive network to decrease a sheet resistance of an electrode and improve performance of a water electrolysis cell.

In one embodiment, a content of fluorine based on 100 at% of a sum of components measured by X-ray photoelectron spectroscopy (XPS) in the entire fluorine-doped metal oxide is 1 at% to 20 at%, and may be, for example, 1 at% to 15 at%, 1 at% to 12 at%, 3 at% to 12 at%, 5 at% to 12 at%, 7 at% to 12 at%, 9 at% to 12 at%, or 10 at% to 12 at%. When a fluorine content in the entire fluorine-doped metal oxide satisfies the above range, it may be possible to uniformly dope fluorine to decrease a sheet resistance of an electrode and improve performance of a water electrolysis cell.

### Oxygen evolution electrode

An oxygen evolution electrode refers to an electrode where an oxygen evolution reaction (OER) occurs, and the oxygen evolution electrode may include the above-described catalyst for an oxygen evolution reaction of a water electrolysis cell and an ion conductor. Since the catalyst for an oxygen evolution reaction of a water electrolysis cell has been described above, a detailed description thereof will be omitted.

The oxygen evolution electrode may include 60 wt% to 95 wt% of the catalyst for an oxygen evolution reaction of a water electrolysis cell based on 100 wt% of the entire oxygen evolution electrode, and may include, for example, 65 wt% to 85 wt%, or 70 wt% to 95 wt% thereof.

The oxygen evolution electrode may further comprise an ion conductor to improve adhesion of the catalyst and transfer hydrogen ions, and the ion conductor may comprise a cation exchange group to secure ion conductivity. In this case, the oxygen evolution electrode may include the ion conductor in an amount of 1 wt% to 25 wt% based on 100 wt% of the entire oxygen evolution electrode, and may include, for example, 2 wt% to 20 wt%, or 3 wt% to 18 wt% thereof.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof. The fluorine-based ion conductor may be a fluorine-based polymer having the cation exchange group in a side chain and containing fluorine in a main chain, for example, poly(perfluorosulfonic acid), poly(perfluorocarboxylic acid), and the like. The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and the like].

According to an embodiment, the ion conductor may have hydrogen ion conductivity. In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound. Since this substitution method is widely known in the art, a detailed description thereof will be omitted.

The ion conductor may be used in the form of a single substance or a mixture, and may also optionally be used together with a non-conductive compound for the purpose of further improving adhesion to a polymer electrolyte membrane. A content of the non-conductive compound may be appropriately adjusted according to the intended use. As the non-conductive compound, at least one selected from polytetrafluoroethylene (PTFE), a tetrafluoroethylene-hexafluoropropylene copolymer (FEP), a tetrafluoroethylene-perfluoro alkyl vinyl ether copolymer (PFA), ethylene/tetrafluoroethylene (ETFE), an ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

### Method of manufacturing an oxygen evolution electrode

According to an embodiment, a method of manufacturing an oxygen evolution electrode includes: (i) manufacturing a metal oxide; (ii) mixing the metal oxide and a fluorine precursor, and then performing a heat treatment to manufacture a fluorine-doped metal oxide; (iii) mixing a noble metal oxide and an ionomer to manufacture a slurry; and (iv) mixing the slurry and the fluorine-doped metal oxide, followed by dispersing.

In one embodiment, the step of manufacturing the metal oxide of (i) may proceed according to a manufacturing method such as a hydrothermal synthesis method, an electrospinning synthesis method, an evaporation induced self-assembly (EISA) method, or the like. More specifically, a metal oxide precursor may be added to a predetermined solvent and then mixed, and a basic compound may be further added to the mixed solution and mixed, and then the metal oxide may be manufactured at a predetermined temperature.

The metal oxide precursor refers to a material in a previous step of the metal oxide, which is a final product included in the catalyst for an oxygen evolution reaction of a water electrolysis cell. A type of the metal oxide may be tungsten oxide, titanium oxide, nickel oxide, ruthenium oxide, tantalum oxide, tin oxide, cobalt oxide, or a combination thereof, and preferably may be tin oxide (SnO₂). Accordingly, the type of the metal oxide precursor is not limited as long as it may generate SnO₂ as a final product. For example, tin ethoxide, tin butoxide, tin isopropoxide, SnCl₄, SnCl₂·2H₂O, Sn(OH)₄, or Sn(SO₄)₂ may be used as the metal oxide precursor, and more specifically, SnCl₄ may be used.

A type of the solvent is not limited as long as it may dissolve the metal oxide precursor. For example, the solvent may include water, an alcohol, or a combination thereof, and the alcohol may be methanol, ethanol, butanol, or isopropanol.

The basic compound may be added to appropriately adjust a pH. The basic compound includes an organic base, ammonia, ammonium hydroxide, sodium hydroxide, potassium hydroxide, and the like, and examples of the organic base include primary amines such as methylamine, ethylamine, isopropylamine, and monoisopropylamine; secondary amines such as diethylamine, diisopropylamine, and dibutylamine; tertiary amines such as trimethylamine, triethylamine, triisopropylamine, and tributylamine; and alkanolamines such as tetramethylammonium hydroxide, choline, monoethanolamine, diethanolamine, 2-aminoethanol, 2-(ethylamino) ethanol, 2-(methylamino) ethanol, N-methyldiethanolamine, dimethylaminoethanol, diethylaminoethanol, nitrilotriethanol, 2-(2-aminoethoxy) ethanol, 1-amino-2-propanol, triethanolamine, monopropanolamine, and dibutanolamine. To adjust the pH, a content of the basic compound may be appropriately adjusted. For example, the basic compound may be added in an amount of 20 ml to 200 ml, 40 ml to 180 ml, 60 ml to 160 ml, 80 ml to 140 ml, or 100 ml to 120 ml based on 100 ml of the metal oxide precursor.

A reaction may proceed for a predetermined time at a predetermined temperature in a mixed solution in which the basic compound is mixed with the metal oxide precursor solution. For example, the temperature at which the reaction proceeds may be 40°C to 120°C, 45°C to 115°C, 50°C to 110°C, 55°C to 105°C, or 60°C to 100°C, and the time for which the reaction proceeds may be 48 hours to 96 hours, 54 hours to 90 hours, 60 hours to 84 hours, or 66 hours to 78 hours.

After the reaction, a first heat treatment process may be performed. The first heat treatment may be performed in an air atmosphere, a first heat treatment temperature may be 200°C to 600°C, 225°C to 575°C, 250°C to 550°C, 275°C to 525°C, or 300°C to 500°C, and a time for which the first heat treatment process proceeds may be 1 hour to 5 hours, 1.5 hours to 4.5 hours, or 2 hours to 4 hours.

The conductive additive containing the metal oxide may be adjusted to various sizes and shapes according to pH, temperature, time, and the like, the conductive additive may have a sphere shape or a wire shape, and when the conductive additive has a sphere shape, an average particle diameter (D₅₀) of the conductive additive may be 0.05 µm to 0.5 µm, for example, 0.05 µm to 0.3 µm, 0.05 µm to 0.3 µm, or 0.05 µm to 0.1 µm, and when the conductive additive has a wire shape, a length of the conductive additive may be 1 µm to 200 µm, for example, 3 µm to 180 µm, 5 µm to 165 µm, or 10 µm to 150 µm, and a diameter of the conductive additive may be 0.1 µm to 1.0 µm, for example, 0.2 µm to 1.0 µm, 0.2 µm to 0.9 µm, or 0.2 µm to 0.8 µm. Accordingly, by forming a conductive network, a sheet resistance of an electrode may be reduced, and performance of a water electrolysis cell may be improved.

In an implementation, in the step (ii) of manufacturing the fluorine-doped metal oxide, the fluorine precursor may include NH₄F, NH₄HF₂, or a combination thereof, and preferably may be NH₄F. In this case, a molar ratio of the metal oxide and the fluorine precursor may be included as 1:0.1 to 1:20, and for example, may be included as 1:0.5 to 1:20, 1:1 to 1:20, 1:3 to 1:20, 1:8 to 1:20, 1:13 to 1:20, or 1:18 to 1:20. When the molar ratio of the metal oxide and the fluorine precursor is included in the above range, an amount of doped fluorine may be easily adjusted, making it possible to uniformly dope fluorine, thereby reducing a sheet resistance of an electrode and improving performance of a water electrolysis cell.

After the mixing process of the metal oxide and the fluorine precursor proceeds, a second heat treatment process may be performed. The second heat treatment may be performed in an inert gas atmosphere, a heat treatment temperature may be 80°C to 450°C, 100°C to 430°C, or 120°C to 400°C, and a time for which the second heat treatment process proceeds may be 4 hours to 8 hours, 4.5 hours to 7.5 hours, or 5 hours to 7 hours.

The fluorine precursor may be in a solid state, and the fluorine precursor in the solid state may be doped into the metal oxide through the second heat treatment. According to a general solution-based synthesis method, there is a problem in that it is difficult to adjust a doping amount of fluorine, but when a fluorine precursor in a solid state is used, a doping amount of fluorine may be easily adjusted, and uniform particles may be synthesized by suppressing agglomeration during the process of doping fluorine into the metal oxide.

In one embodiment, in the step (iii) of manufacturing a mixture by mixing the noble metal oxide and the ionomer, the noble metal oxide may be IrOₓ (x is an integer of 1 to 3), RuOₓ (x is an integer of 1 to 3), PdOₓ (x is an integer of 1 to 3), IrMOₓ (M includes Ru, Sn, Ti, Te, Nb, or a combination thereof, and x is an integer of 1 to 3), or a combination thereof, and may preferably be IrOₓ. At this time, based on 100 wt% of a total of the fluorine-doped metal oxide manufactured through the step (ii) and the noble metal oxide, 0.1 wt% to 15 wt% of the fluorine-doped metal oxide may be included, and for example, 0.2 wt% to 15 wt%, 0.4 wt% to 12 wt%, or 0.5 wt% to 10 wt% may be included. When a weight ratio of the fluorine-doped metal oxide and the noble metal oxide is included in the range, the catalyst for an oxygen evolution reaction including the same may form a conductive network to reduce a sheet resistance of an electrode, and improve performance of a water electrolysis cell.

The ionomer may be a cation conductor having a cation exchange group capable of exchanging cations, or an anion conductor having an anion exchange group capable of exchanging anions such as hydroxy ions, carbonates, or bicarbonates.

The cation exchange group may be any one selected from the group consisting of a sulfonic acid group, a carboxyl group, a boronic acid group, a phosphoric acid group, an imide group, a sulfonimide group, a sulfonamide group, and a combination thereof, and may generally be a sulfonic acid group or a carboxyl group.

The cation conductor may comprise the cation exchange group, and may comprise a fluorine-based polymer including fluorine in a main chain; a hydrocarbon-based polymer such as benzimidazole, polyamide, polyamide imide, polyimide, polyacetal, polyethylene, polypropylene, acrylic resin, polyester, polysulfone, polyether, polyether imide, polyether sulfone, polycarbonate, polystyrene, polyphenylene sulfide, polyether ether ketone, polyether ketone, polyaryl ether sulfone, polyphosphazene, or polyphenylquinoxaline; a partially fluorinated polymer such as a polystyrene-graft-ethylene tetrafluoroethylene copolymer or a polystyrene-graft-polytetrafluoroethylene copolymer; a sulfonimide, and the like.

In addition, in the cation conductor, H in the cation exchange group at a side chain terminal may be substituted with Na, K, Li, Cs, or tetrabutylammonium. When substituting H with Na in the cation exchange group at the end of the side chain, NaOH is used for substitution during the preparation of a carbon structure composition, when substituting with tetrabutylammonium, tetrabutylammonium hydroxide is used for substitution, and K, Li, or Cs may also be substituted using an appropriate compound.

As the anion conductor, a polymer doped with a metal hydroxide may generally be used, and specifically, poly(ether sulfone), polystyrene, a vinyl-based polymer, poly(vinyl chloride), poly(vinylidene fluoride), poly(tetrafluoroethylene), poly(benzimidazole), poly(ethylene glycol), or the like doped with a metal hydroxide may be used.

The ionomer may be included in an amount of 10 wt% to 45 wt% based on 100 wt% of a total of the noble metal oxide and the ionomer, and for example, 10 wt% to 40 wt%, 10 wt% to 35 wt%, or 10 wt% to 33 wt% may be included. When a content of the ionomer is included in the range, there is an advantage in that performance of the water electrolysis cell may be improved, and at the same time, aggregation between the ionomers due to an excess of the ionomer may be suppressed.

In one embodiment, in the step (iv) of dispersing after mixing the slurry and the fluorine-doped metal oxide, based on 100 wt% of a total of the slurry and the fluorine-doped metal oxide, 0.1 wt% to 15 wt% of the fluorine-doped metal oxide may be included, and for example, 0.2 wt% to 15 wt%, 0.4 wt% to 12 wt%, or 0.5 wt% to 10 wt% may be included. After mixing the slurry and the fluorine-doped oxide in the content range, it may be manufactured through any one dispersion method selected from ultrasonic dispersion, stirring, 3-roll milling, ball milling, planetary stirring, high-pressure dispersion, and mixing methods thereof.

### Membrane-electrode assembly for a water electrolysis cell

A membrane-electrode assembly for a water electrolysis cell according to an embodiment comprises a polymer electrolyte membrane, an oxygen evolution electrode positioned on one surface of the polymer electrolyte membrane; and a hydrogen evolution electrode positioned on the other side of the polymer electrolyte membrane.

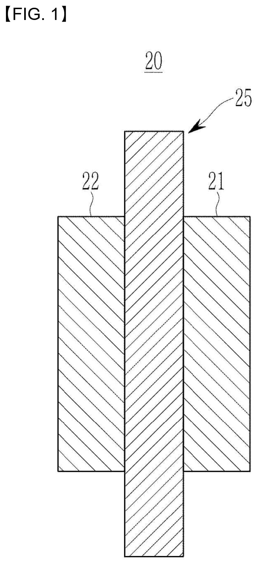

The membrane-electrode assembly for a water electrolysis cell is illustrated in FIG. 1. The membrane-electrode assembly for a water electrolysis cell (20) according to FIG. 1 comprises a polymer electrolyte membrane (25); an oxygen evolution electrode (21) positioned on one surface of the polymer electrolyte membrane; and a hydrogen evolution electrode (22) positioned on the other side of the polymer electrolyte membrane.

Since the oxygen evolution electrode has been described above, a detailed description thereof will be omitted, and the hydrogen evolution electrode and the polymer electrolyte membrane will be described in detail.

### Hydrogen evolution electrode

The hydrogen evolution electrode refers to an electrode on which a hydrogen evolution reaction (HER) occurs, and the hydrogen evolution electrode may comprise a catalyst for a hydrogen evolution reaction. The catalyst for a hydrogen evolution reaction may comprise active particles and a support, the active particles may include a noble metal, and the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support. The carbon-based support may be graphite, super P (super P), carbon fiber (carbon fiber), carbon sheet (carbon sheet), carbon black (carbon black), Ketjen black (Ketjen Black), Denka black (Denka black), acetylene black (acetylene black), carbon nanotube (carbon nano tube, CNT), carbon sphere (carbon sphere), carbon ribbon (carbon ribbon), fullerene (fullerene), activated carbon, carbon nanofiber, carbon nanowire, carbon nanoball, carbon nanohorn, carbon nanocage, carbon nanoring, ordered nano-/meso-porous carbon (ordered nano-/meso-porous carbon), carbon aerogel, mesoporous carbon (mesoporous carbon), graphene, stabilized carbon, activated carbon, or a combination thereof.

The oxygen evolution electrode and the hydrogen evolution electrode may each comprise only a catalyst layer comprising the catalyst for an oxygen evolution reaction and the catalyst for a hydrogen evolution reaction, respectively, but may further comprise an electrode substrate together with the catalyst layer. In this case, the electrode substrate may serve to diffuse a fuel and an oxidant to the catalyst layer while serving to support the electrode. The electrode substrate is not particularly limited, and any known electrode substrate may be used. Specifically, the electrode substrate may be carbon paper, carbon cloth, carbon felt, or metal cloth (referring to a porous film constituted by a metal cloth in a fibrous state or a metal film formed on a surface of a cloth formed of polymer fibers) that may be used as a conductive substrate. As the electrode substrate, one treated to be water-repellent with a fluorine-based resin may be used, and in this case, it may prevent reactant diffusion efficiency from being reduced by water generated during operation of the water electrolysis cell. As the fluorine-based resin, polytetrafluoroethylene, polyvinylidene fluoride, polyhexafluoropropylene, polyperfluoroalkyl vinyl ether, polyperfluorosulfonyl fluoride, alkoxyvinyl ether, fluorinated ethylene propylene, polychlorotrifluoroethylene, or a copolymer thereof may be used.

The oxygen evolution electrode and the hydrogen evolution electrode may comprise a microporous layer in addition to the above-described catalyst layer and the electrode substrate. The microporous layer may perform a role of enhancing a reactant diffusion effect, and may generally include a conductive powder having a small particle diameter, for example, carbon powder, carbon black, acetylene black, activated carbon, carbon fiber, fullerene, carbon nanotube, carbon nanowire, carbon nano-horn, or carbon nano ring.

### Polymer electrolyte membrane

The polymer electrolyte membrane has an ion exchange function of transporting hydrogen ions generated in the oxygen evolution electrode to the catalyst for a hydrogen evolution reaction. A polymer electrolyte membrane according to an embodiment may include a porous support including a plurality of pores, and an ion conductor filling the pores of the porous support.

The porous support may be a fluorine-based support or a nano-web support. The fluorine-based support may correspond to, for example, expanded polytetrafluoroethylene (e-PTFE) having a microstructure of polymer fibrils or a microstructure in which nodes are connected to each other by fibrils. In addition, a film having a microstructure of polymer fibrils in which the nodes do not exist may also be used as the porous support.

The fluorine-based support may include a perfluorinated polymer. The porous support may be formed by extruding dispersion polymerized PTFE into a tape in the presence of a lubricant and stretching a material obtained thereby to result in a more porous and stronger porous support. In addition, an amorphous content of the PTFE may be increased by heat-treating the e-PTFE at a temperature exceeding a melting point (about 342°C) of the PTFE. The e-PTFE film manufactured by the method may have micropores having various diameters and a porosity. The e-PTFE film manufactured by the method may have voids of at least 35 %, and a diameter of the micropores may be about 0.01 to 1 µm (micrometers).

The nano-web support may be a non-woven fibrous web consisting of a plurality of randomly oriented fibers. The non-woven fibrous web refers to a sheet having a structure of individual fibers or filaments that are interlaid, but not in the same manner as a woven cloth. The non-woven fibrous web may be manufactured by carding, garneting, air-laying, wet-laying, melt blowing, spun bonding, or stitch bonding.

The fibers may comprise one or more polymer materials, and any material generally used as a fiber-forming polymer material may be used, and specifically, a hydrocarbon-based fiber-forming polymer material may be used. For example, the fiber-forming polymer material may include polyolefins such as polybutylene, polypropylene, and polyethylene, polyesters such as polyethylene terephthalate and polybutylene terephthalate, polyamides (nylon-6 and nylon-6,6), polyurethane, polybutene, polylactic acid, polyvinyl alcohol, polyphenylene sulfide, polysulfone, liquid crystalline polymers, polyethylene-co-vinyl acetate, polyacrylonitrile, cyclic polyolefins, polyoxymethylene, polyolefin-based thermoplastic elastomers, or a combination thereof.

The nano-web support may be a support in which nano-fibers are integrated into a non-woven fabric form including a plurality of pores.

As the nanofibers, a hydrocarbon-based polymer exhibiting excellent chemical resistance and having hydrophobicity so that there is no concern of shape deformation due to moisture in a high-humidity environment may be preferably used. Specifically, as the hydrocarbon-based polymer, nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, copolymers thereof, or mixtures thereof may be used.

The nano-web support is an aggregate of nanofibers in which nanofibers manufactured by electrospinning are randomly arranged. In this case, the nanofiber may have an average diameter of 40 nm to 5000 nm when calculated from an average of 50 fiber diameters measured using a scanning electron microscope (Scanning Electron Microscope, JSM6700F, JEOL) in consideration of a porosity and a thickness of the nanoweb. When the average diameter of the nanofibers is within the range, mechanical strength may be excellent, and an appropriate porosity may be secured.

A thickness of the non-woven fibrous web may be 10 µm to 50 µm or 15 µm to 43 µm. When the thickness of the non-woven fibrous web is within the range, mechanical strength, weight reduction, and integration may be excellent. The non-woven fibrous web may have a basic weight of 5 to 30 mg/cm². When the basis weight of the non-woven fibrous web is less than the numerical range, visible pores may be formed, and thus it may be difficult to function as a porous support, and when the basic weight is greater than the numerical range, it may be manufactured like a form of paper or a woven cloth in which pores are hardly formed. The porosity may be calculated by a ratio of an air volume in the porous support to a total volume of the porous support according to Equation 1 below. At this time, the total volume may be calculated by preparing a rectangular-shaped sample and measuring a width, a length, and a thickness, and the air volume may be obtained by measuring a mass of the sample and then subtracting a polymer volume inversely calculated from a density from the total volume. [Equation 1] 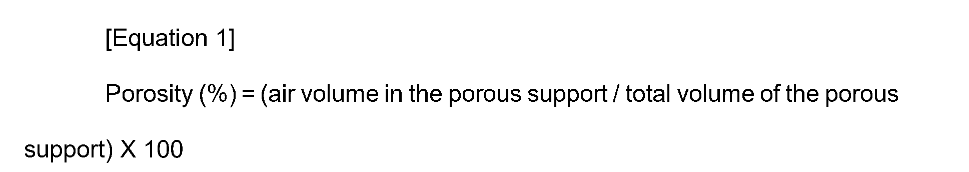 Porosity (%) = (air volume in the porous support / total volume of the porous support) X 100

For example, the porosity of the porous support may correspond to 30% to 90%. When the porosity of the porous support is within the range, a problem of deterioration of impregnability of the ion conductor or a problem in which a post-process does not proceed smoothly due to deterioration of stability may not occur.

The ion conductor is as described above. The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### Water electrolysis cell

In one embodiment, a water electrolysis cell comprises the membrane-electrode assembly for a water electrolysis cell.

Since the water electrolysis cell is the same as a known one except for comprising the membrane-electrode assembly according to an embodiment, a detailed description thereof will be omitted.

### [Mode for Invention]

Hereinafter, Examples and Comparative Examples of the present invention will be described. The following Examples are only examples of the present invention, and the present invention is not limited to the following Examples.

### Example 1

### 1. Preparation of a catalyst for an oxygen evolution reaction

1.28 g of tetradecylamine (C₁₄H₃₁N) (95%) is dissolved in 160 ml of an aqueous ethanol solution (ethanol:water=1:2.5), and then 20 ml of ethanol in which 5.21 g of tin tetrachloride (SnCl₄) is dissolved is added and mixed for 1 hour. Next, the mixture is mixed with 200 ml of a 1.5 mM ammonia solution, subjected to a reflux reaction at 80°C for 72 hours, washed using centrifugation, and dried using a thermal drying or freeze drying method. The powder dried in this way is subjected to a heat treatment in an air atmosphere at a temperature of 400°C for 3 hours to obtain an SnO₂ powder.

1 g of the prepared SnO₂ powder and 0.25 g of NH₄F, which is a fluorine precursor, are mixed such that a molar ratio of SnO₂ and NH₄F is 1:1, and the resulting mixture is homogeneously mixed to a particle size of 150 µm to prepare a mixture. Here, the amount of doped fluorine may be controlled by controlling the amounts of the fluorine precursor and the prepared SnO₂ powder. The prepared mixture was subjected to a heat treatment in an inert gas atmosphere at a temperature of 400°C for 6 hours, and the heat-treated powder was washed and filtered using ethanol and distilled water, and then dried at a temperature of 60°C for 12 hours to prepare a conductive additive.

A catalyst slurry is manufactured by mixing an IrOₓ catalyst and an ionomer solution such that an ionomer/catalyst ratio is 0.3. A catalyst composition for an oxygen evolution reaction was manufactured by adding 2 wt% of the manufactured conductive additive based on 100 wt% of the entire catalyst slurry to the manufactured catalyst slurry, dispersing it, and then stirring it for 24 hours. The catalyst composition for an oxygen evolution reaction is referred to as a first catalyst composition.

### 2. Manufacture of a membrane-electrode assembly comprising a catalyst for an oxygen evolution reaction

A second catalyst composition was manufactured by mixing a catalyst having a content of platinum particles of 46 wt% on a graphite support and an ionomer solution such that an ionomer/carbon ratio is 1.0. A first electrode was manufactured by thinly applying the first catalyst composition on a transfer substrate via spray, decal, or ultrasonic spray coating, and a second electrode was manufactured by applying the second catalyst composition on another transfer substrate, and then a membrane-electrode assembly was manufactured by transferring the first electrode to one side of a polymer electrolyte membrane, and transferring and bonding the second electrode to the opposite side thereof.

### Example 2

A catalyst for an oxygen evolution reaction and a membrane-electrode assembly were manufactured in substantially the same manner as in Example 1, except that in the manufacture of the catalyst for an oxygen evolution reaction, a conductive additive was manufactured by using 1.5 g of NH₄F, which is a fluorine precursor, such that a molar ratio of SnO₂ and NH₄F was 1:6.

### Example 3

A catalyst for an oxygen evolution reaction and a membrane-electrode assembly were manufactured in substantially the same manner as in Example 1, except that in the manufacture of the catalyst for an oxygen evolution reaction, a conductive additive was manufactured by using 3 g of NH₄F, which is a fluorine precursor, such that a molar ratio of SnO₂ and NH₄F was 1:12.

### Example 4

A catalyst for an oxygen evolution reaction and a membrane-electrode assembly were manufactured in substantially the same manner as in Example 1, except that in the manufacture of the catalyst for an oxygen evolution reaction, a conductive additive was manufactured by using 3.7 g of NH₄F, which is a fluorine precursor, such that a molar ratio of SnO₂ and NH₄F was 1:15.

### Example 5

A catalyst for an oxygen evolution reaction and a membrane-electrode assembly were manufactured in substantially the same manner as in Example 1, except that in the manufacture of the catalyst for an oxygen evolution reaction, a conductive additive was manufactured by using 5 g of NH₄F, which is a fluorine precursor, such that a molar ratio of SnO₂ and NH₄F was 1:20.

### Example 6

A solution is prepared by dissolving 3 g of polyvinylpyrrolidone (PVP) in 40 ml of methanol and adding 0.1 g of tin tetrachloride (SnCl₄) thereto. High-voltage power (15 kV) is applied to a metal nozzle using a single nozzle electrospinning system to obtain a wire emitter in a wire shape from the manufactured solution, and the wire emitter is washed and then thermally dried. The manufactured wire emitter is heat-treated in an air atmosphere at a temperature of 400°C for 3 hours to obtain an SnO₂ powder.

A mixture is prepared by using 1 g of the obtained SnO₂ powder and 5 g of NH₄F as a fluorine precursor, such that a molar ratio of SnO₂ and NH₄F is 1:20, and the mixture is homogeneously mixed to have a particle size of 150 µm. The manufactured mixture was heat-treated in an inert gas atmosphere at a temperature of 400°C for 6 hours, and the heat-treated powder was washed and filtered using ethanol and distilled water, and then dried at a temperature of 60°C for 12 hours to manufacture a conductive additive. Thereafter, a catalyst for an oxygen evolution reaction and a membrane-electrode assembly were manufactured in substantially the same manner as in Example 1.

### Comparative Example 1

After 1.28 g of tetradecylamine (C₁₄H₃₁N) (95%) is dissolved in 160 ml of an aqueous ethanol solution (ethanol:water=1:2.5), 30 ml of ethanol in which 2.75 g of tin tetrachloride (SnCl₄) and 0.40 g of NH₄F are dissolved is added and mixed for 1 hour. Next, the mixture is mixed with 200 ml of a 1.5 mM ammonia solution, reflux-reacted at 80°C for 72 hours, washed using centrifugation, and dried using a thermal drying or freeze drying method. The powder dried in this way was heat-treated in an air atmosphere at a temperature of 400°C for 3 hours to manufacture a conductive additive. Thereafter, a catalyst for an oxygen evolution reaction and a membrane-electrode assembly were manufactured in substantially the same manner as in Example 1.

### Comparative Example 2

After 1.28 g of tetradecylamine (C₁₄H₃₁N) (95%) is dissolved in 160 ml of an aqueous ethanol solution (ethanol:water=1:2.5), 30 ml of ethanol in which 2.8 g of tin tetrachloride (SnCl₄) and 0.49 g of niobium(V) ethoxide (C₁₀H₂₅NbO₅) are dissolved is added and mixed for 1 hour. Next, the mixture is mixed with 200 ml of a 1.5 mM ammonia solution, reflux-reacted at 80°C for 72 hours, washed using centrifugation, and dried using a thermal drying or freeze drying method. The powder dried in this way was heat-treated in an air atmosphere at a temperature of 400°C for 3 hours to manufacture a conductive additive. Thereafter, a catalyst for an oxygen evolution reaction and a membrane-electrode assembly were manufactured in substantially the same manner as in Example 1.

### Comparative Example 3

After 2.5 g of tetradecylamine (C₁₄H₃₁N) (95%) is dissolved in 160 ml of an aqueous ethanol solution (ethanol:water=1:2.5), 60 ml of ethanol in which 0.3 g of tin tetrachloride (SnCl₄) and 4.3 g of indium(III) chloride (InCl₃) are dissolved is added and mixed for 1 hour. Next, the mixture is mixed with 200 ml of a 1.5 mM ammonia solution, reflux-reacted at 80°C for 72 hours, washed using centrifugation, and then dried using a thermal drying or freeze drying method. The thus-dried powder was heat-treated in an air atmosphere at a temperature of 400°C for 3 hours to manufacture a conductive additive. Thereafter, a catalyst for an oxygen evolution reaction and a membrane-electrode assembly were manufactured in substantially the same manner as in Example 1.

### Evaluation Example 1: Fluorine Content Analysis

In the conductive additives manufactured in the Examples and Comparative Examples, in order to confirm the degree of fluorine doping of the fluorine-doped metal oxide, the fraction of fluorine atoms in the entire fluorine-doped metal oxide was measured by X-ray photoelectron spectroscopy (XPS) , and the results are shown in Table 1.

### Evaluation Example 2: Electrical Conductivity Evaluation

The first electrodes manufactured in the Examples and Comparative Examples were cut into 2 cm x 2 cm, electrodes were formed at both corners using silver plates, and a sheet resistance was measured by a van der Pauw sheet resistance measurement method to evaluate electrical conductivity, and the results are shown in Table 1.

**[Table 1]**

| | Fluorine content (at%) | Electrical conductivity (mS/cm) |
|---|---|---|
| Example 1 | 1.1 | 3.38 |
| Example 2 | 6.2 | 6.69 |
| Example 3 | 8.7 | 12.12 |
| Example 4 | 9.6 | 14.28 |
| Example 5 | 10.1 | 16.26 |
| Example 6 | 10.3 | 26.78 |
| Comparative Example 1 | 0.7 | 0.001 |
| Comparative Example 2 | - | 0.55 |
| Comparative Example 3 | - | 0.8 |

Referring to Table 1, compared to Comparative Example 1 manufactured by dissolving NH₄F, which is a fluorine precursor, in a solution, it may be confirmed that in the case of Examples 1 to 6 manufactured by mixing NH₄F in a solid state and then performing a heat treatment, the electrical conductivity is excellent. In addition, it may be confirmed that the electrical conductivity can be adjusted by adjusting the molar ratio of NH₄F.

In addition, compared to Comparative Examples 2 and 3 doped with niobium or indium, it may be confirmed that Examples 1 to 6 doped with fluorine exhibit excellent electrical conductivity.

In addition, as a result of measuring the electrical conductivity according to the shape of the metal oxide when the same amount of the fluorine precursor is used, compared to Example 5 in which fluorine is doped into the metal oxide having the sphere shape, it may be confirmed that in the case of Example 6 in which fluorine is doped into the metal oxide having the wire shape, the electrical conductivity is improved.

### Evaluation Example 3: Evaluation of electrochemical performance and comparison of performance changes after a degradation test

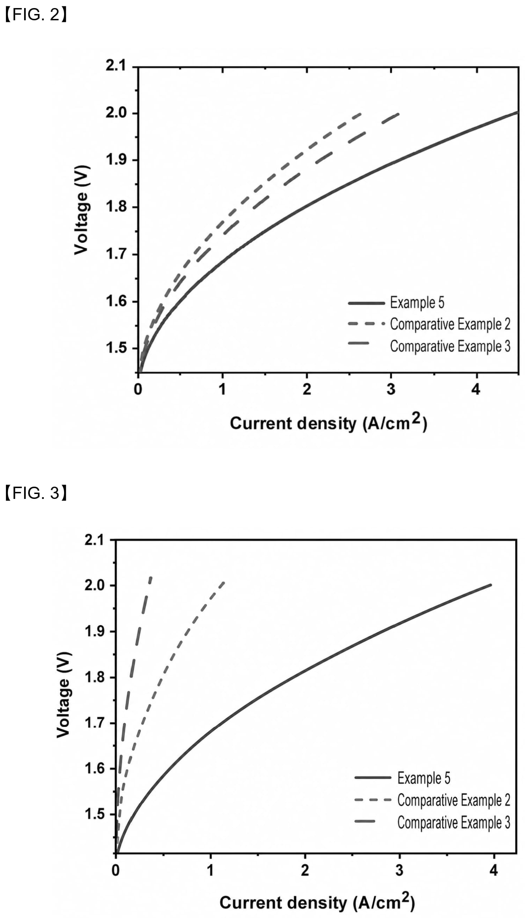

To evaluate the electrochemical performance of the water electrolysis cells including the membrane-electrode assemblies of Example 5, Comparative Example 2, and Comparative Example 3, while applying a flow rate of 5 ml/min of distilled water at 80°C, current and resistance were measured at a voltage from 1.4V to 2V to evaluate performance, and the results thereof are shown in FIG. 2. Thereafter, for the degradation test, after performing degradation for 100 hours at 2.0 A/cm² with a constant current at 80°C, current and resistance were measured at a voltage from 1.4V to 2V to evaluate performance, and the results thereof are shown in FIG. 3.

Referring to FIG. 2, in comparison with Comparative Examples 2 and 3, it may be confirmed that the highest initial water electrolysis performance was exhibited in Example 5 doped with fluorine, and it was confirmed that this exhibits a trend consistent with the electrical conductivity of the conductive additive.

Referring to FIG. 3, even when comparing the changed performance after the 100-hour degradation test, compared to Comparative Examples 2 and 3, it may be confirmed that the highest water electrolysis performance was exhibited in Example 5 doped with fluorine.

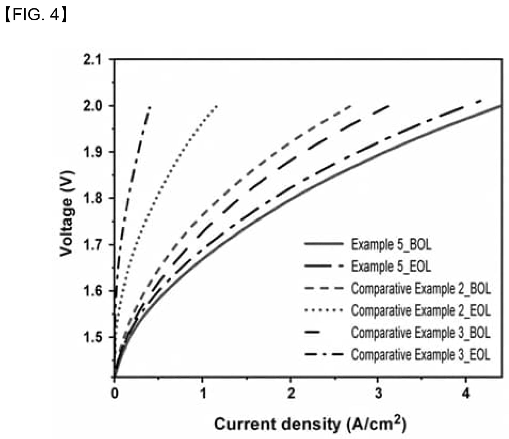

Referring to FIG. 4 showing both FIG. 2 showing the initial water electrolysis performance and FIG. 3 showing the changed performance after the 100-hour degradation test, it may be confirmed that the extent of the performance change increases in the order of Example 5, Comparative Example 2, and Comparative Example 3, and it may be confirmed that the difference in performance change is large due to a change in the electrical conductivity of the electrode caused by the elution of the doping element. In FIG. 4, BOL refers to the graph of FIG. 2 illustrating the initial water electrolysis performance, and EOL refers to the graph of FIG. 3 illustrating the changed performance after the 100-hour degradation test.

### Evaluation Example 4: Comparison of element elution amounts in an electrolyte by ICP after an electrochemical degradation test

After an electrochemical degradation test of the water electrolysis cells comprising the membrane-electrode assemblies of Example 5, Comparative Example 2, and Comparative Example 3, eluted elements and elution amounts thereof in the electrolyte were analyzed, and the results thereof are shown in Table 2.

**[Table 2]**

| | Eluted element | Eluted element |
|---|---|---|
| | Tin (*µ*g/cm²) | Doping element (*µ*g/cm²) |
| Example 5 | 0.2 | 0.1 |
| Comparative Example 2 | 7.5 | 2.0 |
| Comparative Example 3 | 2.3 | 18 |

Referring to Table 2, in the case of the tin oxide coated with fluorine according to Example 5, compared to the tin oxide doped with a cation such as niobium or indium according to Comparative Examples 2 to 3, it may be confirmed that the elution amount of the doped fluorine as well as tin is reduced.

Although the preferred embodiments have been described in detail above, the scope of the present invention is not limited thereto, and various modifications and improvements made by those skilled in the art using the basic concept defined in the following claims also fall within the scope of the present invention.

## Claims

1. A catalyst for an oxygen evolution reaction of a water electrolysis cell comprising:
water electrolysis catalyst particles containing a noble metal oxide; and
a conductive additive containing a fluorine-doped metal oxide,
wherein a content of fluorine is 1 at% to 20 at% based on 100 at% of a sum of components of the entire fluorine-doped metal oxide measured by X-ray photoelectron spectroscopy.

2. The catalyst for an oxygen evolution reaction of a water electrolysis cell of claim 1,
wherein the noble metal oxide is IrOₓ (x is an integer of 1 to 3).

3. The catalyst for an oxygen evolution reaction of a water electrolysis cell of claim 1,
wherein the water electrolysis catalyst particles are supported on a support.

4. The catalyst for an oxygen evolution reaction of a water electrolysis cell of claim 3,
wherein an average particle diameter (D₅₀) of the water electrolysis catalyst particles is 1 nm to 15 nm.

5. The catalyst for an oxygen evolution reaction of a water electrolysis cell of claim 1,
wherein the catalyst for an oxygen evolution reaction of a water electrolysis cell comprises 60 wt% to 95 wt% of the water electrolysis catalyst particles based on 100 wt% of a total of the water electrolysis catalyst particles and the conductive additive.

6. The catalyst for an oxygen evolution reaction of a water electrolysis cell of claim 1,
wherein the metal oxide includes tungsten oxide, titanium oxide, nickel oxide, ruthenium oxide, tantalum oxide, tin oxide, cobalt oxide, or a combination thereof.

7. The catalyst for an oxygen evolution reaction of a water electrolysis cell of claim 1,
wherein the metal oxide is tin oxide.

8. The catalyst for an oxygen evolution reaction of a water electrolysis cell of claim 1,
wherein the conductive additive has a shape of a sphere or a wire.

9. The catalyst for an oxygen evolution reaction of a water electrolysis cell of claim 8,
wherein an average particle diameter (D₅₀) of the conductive additive having the sphere shape is 0.05 µm to 0.5 µm.

10. The catalyst for an oxygen evolution reaction of a water electrolysis cell of claim 8,
wherein a length of the conductive additive having the wire shape is 1 µm to 200 µm, and
a diameter of the conductive additive having the wire shape is 0.1 µm to 1.0 µm.

11. The catalyst for an oxygen evolution reaction of a water electrolysis cell of claim 1,
wherein the catalyst for an oxygen evolution reaction of a water electrolysis cell comprises 0.1 wt% to 15 wt% of the conductive additive based on 100 wt% of the total of the water electrolysis catalyst particles and the conductive additive.

12. An oxygen evolution electrode comprising the catalyst for an oxygen evolution reaction of a water electrolysis cell according to claim 1.

13. A method of manufacturing an oxygen evolution electrode comprising:
(i) manufacturing a metal oxide;
(ii) mixing the metal oxide and a fluorine precursor, and then performing a heat treatment to manufacture a fluorine-doped metal oxide;
(iii) mixing a noble metal oxide and an ionomer to manufacture a slurry; and
(iv) mixing the slurry and the fluorine-doped metal oxide, followed by dispersing.

14. The method of manufacturing an oxygen evolution electrode of claim 13,
wherein the fluorine precursor includes NH₄F, NH₄HF₂, or a combination thereof.

15. The method of manufacturing an oxygen evolution electrode of claim 13,
wherein the fluorine precursor is in a solid state.

16. The method of manufacturing an oxygen evolution electrode of claim 13,
wherein in the step (ii), a molar ratio of the metal oxide and the fluorine precursor is 1:0.1 to 1:20.

17. A membrane-electrode assembly for a water electrolysis cell comprising:
a polymer electrolyte membrane;
the oxygen evolution electrode according to claim 12 positioned on one surface of the polymer electrolyte membrane; and
a hydrogen evolution electrode positioned on the other side of the polymer electrolyte membrane.

18. A water electrolysis cell comprising the membrane-electrode assembly for a water electrolysis cell according to claim 17.
